## Europäisches Patentamt
## European Patent Office
## Office européen des brevets

(11) Veröffentlichungsnummer : **0 342 432 B1**

## (12) EUROPÄISCHE PATENTSCHRIFT

(45) Veröffentlichungstag der Patentschrift :
**15.07.92 Patentblatt 92/29**

(51) Int. Cl.⁵ : **F16H 7/16, F01L 1/02**

(21) Anmeldenummer : **89107983.2**

(22) Anmeldetag : **03.05.89**

(54) **Spannvorrichtung für Riemen.**

(30) Priorität : **18.05.88 DE 3816889**

(43) Veröffentlichungstag der Anmeldung :
**23.11.89 Patentblatt 89/47**

(45) Bekanntmachung des Hinweises auf die
Patenterteilung :
**15.07.92 Patentblatt 92/29**

(84) Benannte Vertragsstaaten :
**DE ES FR GB IT**

(56) Entgegenhaltungen :
**EP-A- 0 038 233**

(56) Entgegenhaltungen :
**DE-A- 2 535 676**
**DE-A- 2 704 862**
**DE-A- 3 628 297**
**DE-B- 2 617 368**
**DE-C- 849 938**

(73) Patentinhaber : **INA Wälzlager Schaeffler KG**
**Industriestrasse 1-3 Postfach 1220**
**W-8522 Herzogenaurach (DE)**

(72) Erfinder : **Hertrich, Steffen**
**Orionstrassse 8**
**W-8522 Herzogenaurach (DE)**
Erfinder : **Goppelt, Dieter**
**Kärtner-Strasse 1**
**W-8521 Aurachtal (DE)**

EP 0 342 432 B1

## Beschreibung

Die Erfindung betrifft eine Spannvorrichtung für Riemen, Ketten oder dergleichen, insbesondere für den Nockenwellenantrieb einer Brennkraftmaschine, mit einer Spannrolle, die auf einem beweglichen Träger gelagert ist, und mit einem Steuerelement, von welchem bei Erwärmung der Träger über ein Betätigungsorgan entgegen der Wirkung einer Druckfeder in Entspannungsrichtung des Riemens bewegbar ist.

Bei Verwendung von Riemen- oder Kettentrieben an Maschinen, die Temperaturschwankungen unterworfen sind, beispielsweise an Verbrennungsmotoren, treten infolge von Wärmedehnungen Vergrößerungen der Achsabstände der treibenden und angetriebenen Riemenscheiben auf, so daß die Riemenspannung auf unerwünscht hohe Werte anwachsen kann. Zum Ausgleich derartiger Spannungsvergrößerungen werden Spannvorrichtungen eingesetzt.

Aus der DE-A-25 35 676 ist eine Spannvorrichtung bekannt, deren temperaturabhängiges Steuerelement auf einen zweiarmigen Schwenkhebel einwirkt, der über einen als Druckfeder wirkenden elastischen Block mit dem Träger einer Spannrolle verbunden ist. Das Steuerelement ist dort als Thermoelement mit einem Meßfühler und einem Motor als Verstelleinrichtung ausgebildet, der eine axiale Verschiebung eines Stellgliedes und über dieses eine Bewegung des Schwenkhebels in Abhängigkeit von der Temperaturänderung bewirkt.

Aus der EP-A-00 38 233 ist eine gattungsgemäße Spannvorrichtung bekannt, die in Abhängigkeit von der Temperatur die Lage einer Spannrolle einstellt. Dort wirkt das als Wärmedehnungszylinder ausgebildete Steuerelement gegen die Wirkung einer Schraubendruckfeder auf einen exzentrisch gelagerten kreisförmigen Träger einer Spannrolle ein, wobei mit steigender Temperatur die Spannrolle in Entspannungsrichtung verlagert wird. Das Steuerelement und die Druckfeder sind dabei räumlich voneinander getrennt angeordnet und greifen an dem Träger an verschiedenen Stellen an. Über den inneren Aufbau des Wärmedehnungszylinders sind dieser Veröffentlichung Hinweise nicht zu entnehmen.

Für die exakte Arbeitsweise eines Druckmittelzylinders als Steuerelement, in welchem die temperaturabhängige Ausdehnung einer Druckflüssigkeit, beispielsweise eines Hydrauliköls, zur Verschiebung einer Kolbenstange und über diese zur Verschiebung eines Spannrollenträgers ausgenutzt werden soll, ist es erforderlich, daß eine vollständige Füllung des Zylinders mit Öl durchgeführt wird, so daß darin keine Luftblasen verbleiben. Da Luft im Gegensatz zu Flüssigkeiten kompressibel ist, würde bei Lufteinschluß in dem Hydraulikzylinder eine konstante Haltekraft für den Spannrollen-Schwenkhebel an dem Zylinderkolben während des Betriebes nicht gewährleistet sein. Außerdem treten bei Erwärmung in einem Gas andere Druckkräfte auf, als in einer Flüssigkeit. Durch die Anwesenheit von Luft in dem Hydraulikzylinder würde daher dessen exakte Wirkungsweise beeinträchtigt sein.

Für die Einfüllung der Druckflüssigkeit in den Druckmittelzylinder und für dessen anschließenden Verschluß liegt es zunächst nahe, eine Befüllschraube vorzusehen, die in eine Gewindebohrung des Zylinders eingeschraubt werden könnte. Dadurch würde jedoch für den Zylinder nicht nur der Material- und Herstellungsaufwand vergrößert, sondern auch die im vorliegenden Fall erforderliche absolute Gasfreiheit des eingefüllten Hydrauliköls nicht gewährleistet sein.

Der Erfindung liegt die Aufgabe zugrunde, das Steuerelement für die Spannvorrichtung so auszubilden, daß es einfach und sicher mit Öl gefüllt und von Gaseinschlüssen befreit werden kann.

Die Aufgabe wird erfindungsgemäß dadurch gelöst, daß eine Lageunveränderliche hohlzylindrische Hülse als ein Bestandteil des Steuerelements vorgesehen ist, die am einen Ende durch einen Boden verschlossen ist und am anderen Ende einen radial nach innen gerichteten Flansch aufweist, gegen den von innen eine Scheibe dichtend anliegt, die in ihrer Mitte einen Druckkolben längsbeweglich und abgedichtet aufnimmt, daß in dem Ringhohlraum zwischen der Bohrung der Hülse und dem Druckkolben die Druckfeder angeordnet ist, die sich einerseits an der Scheibe und andererseits am Druckkolben abstützt, daß zwischen dem Boden und Druckkolben, dessen Stirnfläche im Abstand vom Boden liegt, eine weitere Druckfeder angeordnet ist, die mit geringerer Federkraft der erstgenannten Druckfeder entgegenwirkt, und daß der gesamte Innenraum der Hülse mit einer gasfreien Ausdehnungsflüssigkeit befüllt ist.

Die von der Druckfeder beaufschlagte, als Stützring wirkende Scheibe kann innerhalb der Hülse über einen Dichtungsring an einem den Flansch bildenden umgebördelten Hülsenrand axial abgestützt sein. Dadurch ergibt sich mit einfachen Mitteln ein sicherer Verschluß der Hülse.

Durch axiales Verschieben der Scheibe innerhalb der Hülse ist es in einfacher Weise möglich, die Hülse zu öffnen oder zu verschließen, so daß zusätzliche konstruktive Maßnahmen für das Einfüllen der Ausdehnungsflüssigkeit und den Auslaß von Luft nicht erforderlich sind. Dazu kann in eine Ringnut des Druckkolbens ein U-Bügel eingesteckt werden, an welchem der Stützring mit seiner äußeren Stirnseite axial abstützbar ist, so daß die Verschiebung der Scheibe über den Druckkolben erfolgen kann, an dem sie dann von dem U-Bügel und der Druckfeder gehalten wird.

Die den Druckkolben umgebende Druckfeder kann von mehreren Tellerfedern gebildet sein, während die

2

weitere, an dem Boden abgestützte Druckfeder eine Schraubenfeder sein kann. Solange der U-Bügel sich an dem Druckkolben befindet, hält die weitere Druckfeder über den Druckkolben und/oder über dessen erste Tellerfeder den Stützring in der Schließstellung der Hülse. Erst wenn entgegen der Wirkung der weiteren Druckfeder der Druckkolben mit dem Stützring in die Hülse hineingedrückt wird, erfolgt die Öffnung der Hülse. Dieser Verschluß mit Hilfe der weiteren Druckfeder ist erforderlich, um nach dem Befüllen der Hülse mit Hydrauliköl zu verhindern, daß Hydrauliköl entweichen und Luft in die Hülse einströmen kann.

Der Stützring kann mindestens einen von dem Dichtungsring verschlossenen Längskanal aufweisen, durch den in der Öffnungsstellung beim Befüllen der Hülse Luft nach außen entweichen und die Ausdehnungs- oder Druckflüssigkeit (das Hydrauliköl) in die Hülse einströmen kann. Der Druckkolben kann beispielsweise über eine ringförmige Membran mit dem Stützring verbunden oder in der Bohrung des Stützringes mit einer Dichtung abgedichtet sein, die sich in einer inneren, in Umfangsrichtung verlaufenden Nut des Stützringes befindet. Auf diese Weise kann bei geschlossener Hülse und bei Erwärmung der Druckkolben infolge der thermischen Ausdehnung der Druckflüssigkeit aus der Hülse geringfügig herausgeschoben werden. Dabei verändert sich entweder die Stellung der Membran, oder der Kolben gleitet an der Dichtung des Stützringes entlang.

Der in eine Ringnut des Druckkolbens eingesteckte U-Bügel wird für die Montage des Steuerelements benötigt, wobei der Bügel den Stützring an dessen außerhalb der Hülse befindlicher Stirnseite axial abstützt. In diesem Zustand ist die Druckfeder, die den Druckkolben umgibt, zwischen dem Stützring und dem Ende des Druckkolbens vorgespannt. Da der Stützring über den U-Bügel an dem Druckkolben festgehalten wird, kann die Druckfeder sich nicht ausdehnen. Sie liegt also fest an dem Kolben und dem Stützring. Statt des U-Bügels kann auch eine andere übliche Befestigungsmaßnahme gewählt werden. Der Druckkolben wird mit der vorgespannten Druckfeder und dem Stützring in die Hülse eingesetzt. Danach erfolgt das Umbördeln des Hülsenrandes.

Zum Befüllen mit Hydrauliköl kann die Hülse mit aufragendem Druckkolben in ein teilweise mit Hydrauliköl gefülltes Gefäß gestellt werden, wobei sie mit dem Stützring vollständig in das Öl eingetaucht wird. Über den Druckkolben wird dann der Stützring in eine Öffnungsstellung der Hülse gedrückt und nach dem Ausströmen von Luft aus der Hülse und Einströmen von Öl freigegeben. Die weitere Druckfeder verschließt nun die Hülse. Danach kann durch Erwärmen des so montierten Steuerelements der Druckkolben infolge der thermischen Ausdehnung der Flüssigkeit geringfügig axial aus der Hülse herausgeschoben werden. Dabei löst sich der U-Bügel von dem Stützring ab und kann entfernt werden. Nun stellt sich in Abhängigkeit von der Temperatur ein Kräftegleichgewicht zwischen der Wirkung der Druckfedern und dem Ausdehnungszustand der Druckflüssigkeit ein. Das Steuerelement ist betriebsbereit.

Ausführungsformen der Erfindung sind in den Schutzansprüchen enthalten.

Im folgenden wird eine erfindungsgemäße Spannvorrichtung anhand der Zeichnung erläutert. Es zeigen:

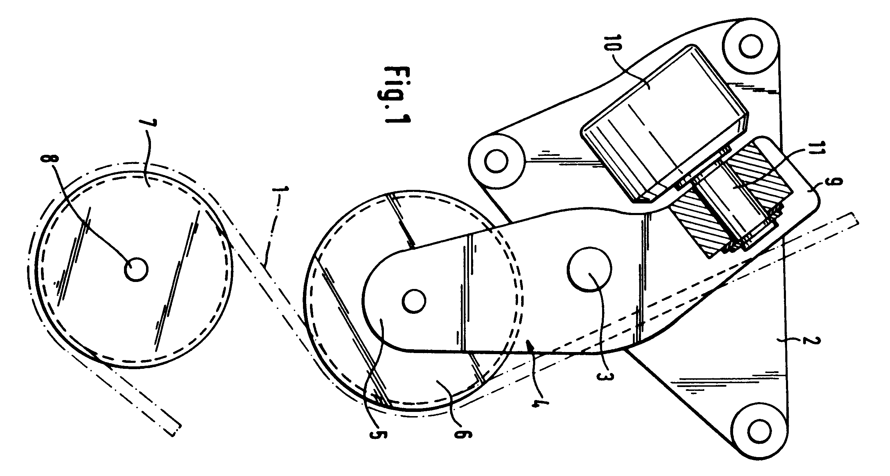

Figur 1 eine schematische Ansicht einer Spannvorrichtung mit einem um eine Riemenscheibe und eine Spannrolle gelegten Riemen;

Figur 2 ein Steuerelement der Spannvorrichtung in einem Längsschnitt;

Figur 3 einen senkrechten Schnitt durch einen Behälter, in welchem gleichzeitig mehrere zusammengebaute Steuerelemente mit der Druckflüssigkeit gefüllt werden

Eine erfindungsgemäße Spannvorrichtung für den Riemen 1 des Nockenwellenantriebs einer Brennkraftmaschine weist eine an der Maschine festlegbare Grundplatte 2 auf, an der um eine feste Schwenkhebelachse 3 ein Schwenkhebel 4 gelagert ist. An einem unteren Ausleger 5 des Schwenkhebels 4 ist eine Spannrolle 6 gelagert, mit welcher der von einer Riemenscheibe 7 der Achse 8 der Kurbelwelle zu der nicht dargestellten Nockenwelle verlaufende Riemen 1 gespannt wird.

An einem oberen Ausleger 9 des Schwenkhebels 4 greift ein auf der Grundplatte 2 befestigtes Steuerelement 10 mit einem Druckkolben 11 an. Beim Ausfahren des Druckkolbens 11 aus dem Gehäuse des Steuerelements wird eine Verschwenkung des Schwenkhebels 4 hervorgerufen, die der Spannrichtung der Spannrolle 6 entgegengesetzt gerichtet ist. Mit infolge der Erwärmung der Brennkraftmaschine im Betrieb größer werdendem Achsabstand der Nockenwelle und der Achse 8 der Kurbelwelle steigt die Vorspannung des Riemens 1 an. Dieser Anstieg der Riemenspannung wird durch Ausfahren des Druckkolbens 11 und die damit verbundene Verschwenkung der Spannrolle 6 in Entspannungsrichtung ausgeglichen. Wenn eine Abkühlung erfolgt, bewegt sich der Druckkolben 11 zurück und zieht dabei den oberen Ausleger 9 des Schwenkhebels 4 in die entgegesetzte Richtung, so daß die Spannrolle 6 sich in Spannrichtung des Riemens 1 bewegt. Die beim Abkühlen an sich absinkende Vorspannung des Riemens 1 wird dadurch konstant gehalten.

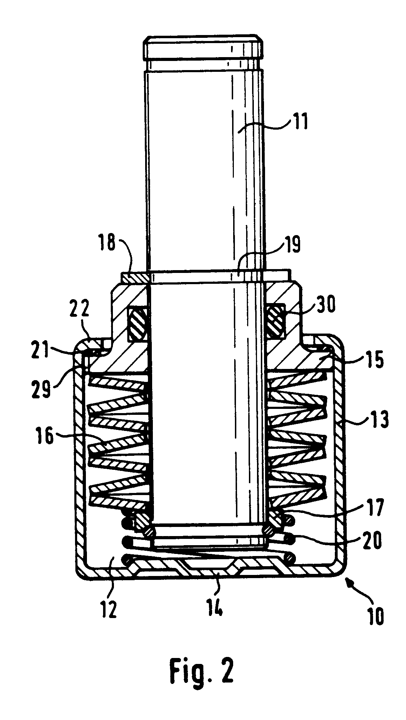

Das Steuerelement 10 ist als Hydraulikzylinder ausgebildet, der einen Aufnahmeraum 12 für eine Druckflüssigkeit aufweist. Dieser wird von einer zylindrischen Hülse 13 gebildet, die an einem stirnseitigen Ende mit einem Boden 14 verschlossen ist. Durch das andere, offene Ende der Hülse 13 ist eine vormontierte Einheit aus dem Druckkolben 11, einem Stützring und einem Paket von Tellerfedern 16 axial eingesteckt. Die Tellerfedern 16 gewährleisten eine hohe Federkraft in geringem Bauraum. Sie bilden die den Druckkolben 11 umgebende Druckfeder, die sich gemäß Figur 2 an einem Ende des Druckkolbens 11 an einem Haltering 17 abstützt und mit ihrem anderen Ende gegen den Stützring 15 drückt. Dieser wird außerhalb der Hülse 13 mit Hilfe eines U-Bügels 18 an dem Druckkolben 11 festgehalten, der in eine Ringnut 19 des Druckkolbens 11 passend eingesteckt ist. Zwischen dem Boden 14 der Hülse 13 und der untersten Tellerfeder 16 befindet sich eine Schraubenfeder 20 als weitere Druckfeder.

Nach dem Einsetzen der Schraubenfeder 20 und des Druckkolbens 11 mit den Tellerfedern 16, dem Stützring 15 und dem U-Bügel 18 in die Hülse 13 wird im Randbereich des Stützrings 15 ein Dichtungsring 21 in die Hülse 13 eingesetzt, dessen äußerer Durchmesser dem inneren Durchmesser der Hülse 13 entspricht. Danach wird als Anlagefläche für den Dichtungsring 21 an der Hülse 13 ein umgebördelter Rand 22 gebildet. Die Schraubenfeder 20 drückt nun den Druckkolben 11 mit den Tellerfedern 16 soweit in axiale Richtung, bis der Stützring 15 mit seinem in der zylindrischen Hülse 13 befindlichen Flansch an dem Dichtungsring 21 zur Anlage kommt. Die Hülse 13 ist verschlossen.

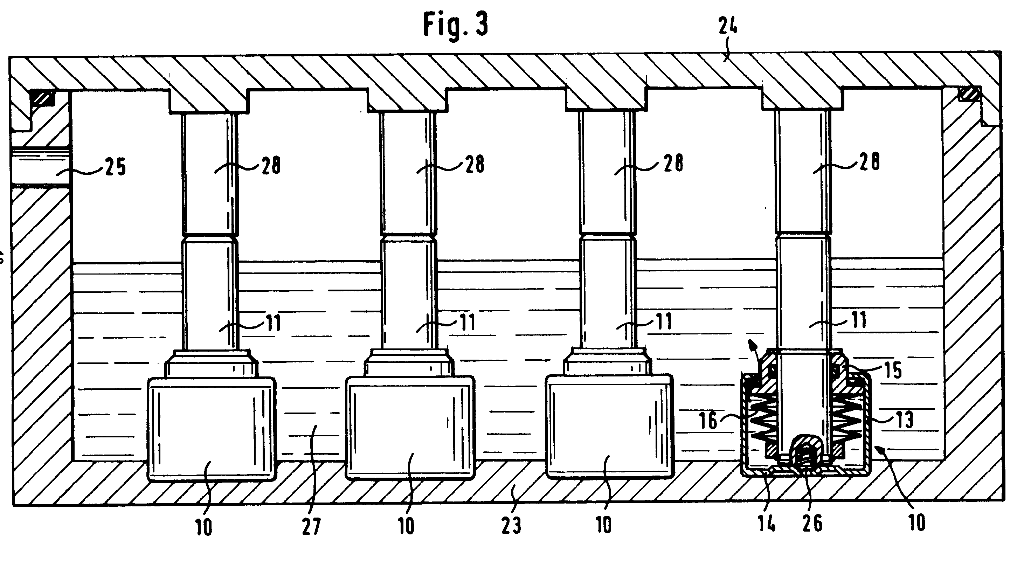

Zum Befüllen mit Druckflüssigkeit können gleichzeitig mehrere Steuerelemente 10 in eine als Evakuiergefäß 23 mit einem Deckel 24 und einer Luftabsaugöffnung 25 ausgebildete Vorrichtung gemäß Figur 3 gestellt werden. Hier ist ein Steuerelement 10 im Längsschnitt dargestellt, dessen zusätzliche Druckfeder als Schraubenfeder 26 teilweise in einer stirnseitigen Bohrung des Druckkolbens 11 angeordnet ist. Innerhalb des Evakuiergefässes 23 befindet sich Druckflüssigkeit 27 mit einem Flüssigkeitsstand, bei dem alle mit senkrechter Achse und untenliegendem Boden 14 eingesetzten Steuerelemente 10 mit ihren Hülsen 13 und den herausragenden Stützringen 15 vollständig eingetaucht sind. Für jeden mit seinem oberen Ende aus der Flüssigkeit herausragenden Druckkolben 11 ist am Deckel 24 ein Stempel 28 vorgesehen, der im geschlossenen Zustand des Evakuiergefässes 23 den Druckkolben 11 mit dem Stützring 15 und den Tellerfedern 16 gegen die Wirkung der Schraubenfeder 26 in die Öffnungsstellung der zylindrischen Hülse 13 drückt. Jeder Stützring 15 weist im Bereich des Dichtungsringes 21 mindestens einen Längskanal 29 auf, durch den nun die in der Hülse 13 befindliche Luft aufsteigen und aus der Hülse 13 entweichen kann. Durch den in Figur 2 erkennbaren Längskanal 29 kann dann Druckflüssigkeit 27 in die Hülse 13 einströmen.

Damit mit großer Sicherheit alle Luft, die den späteren Betrieb des Steuerelementes 10 wegen ihrer Kompressibilität stören könnte, aus jeder Hülse 13 vollständig entweicht, so daß deren freies Volumen ausschließlich mit Druckflüssigkeit gefüllt ist, wird über die Luftabsaugöffnung 25 der Raum oberhalb des Flüssigkeitsspiegels in dem Gefäß evakuiert. Nach diesem Vorgang, wenn also wieder atmosphärischer Druck im Gefäß besteht, wird der Deckel 24 abgehoben und die Schraubenfeder 20 bzw. 26 verschiebt den Stützring 15 an den Dichtungsring 21 und bewirkt so den Verschluß der Hülse 13.

Die mit Druckflüssigkeit gefüllten Steuerelemente 10 können nun dem Evakuiergefäß 23 entnommen werden. Um sie betriebsbereit zu machen, ist jeweils die Entfernung des U-Bügels 18 erforderlich. Das geschieht durch Erwärmen, wobei sich die Druckflüssigkeit in dem Aufnahmeraum 12 ausdehnt und gegen die Wirkung der Tellerfedern 16 den Druckkolben 11 in der Hülse 13 axial nach außen verschiebt. Bei dieser Bewegung gleitet der Kolben 11 an einer Dichtung 30 entlang, die in einer inneren Ringnut des Stützringes 15 angeordnet ist. Der U-Bügel 18 hat sich nun von dem Stützring 15 abgelöst und kann aus der Ringnut 19 entfernt werden. Beim Abkühlen verschieben die Tellerfedern 16 den Druckkolben 11 in dem Maße in die Hülse 13 zurück, wie das Volumen der Druckflüssigkeit in dem Aufnahmeraum 12 schwindet. Das Steuerelement 10 ist betriebsbereit. Es besteht Gleichgewicht der Kräfte zwischen den Tellerfedern 16 einerseits und der Schraubenfeder 20 bzw. 26 und der Flüssigkeitsdruckkraft andererseits.

Durch die Anordnung der Druckfeder mit den Tellerfedern 16 in dem Steuerelement 10 ergibt sich eine vormontierte Baueinheit, die bei Verschleiß in einfacher Weise ausgewechselt werden kann. Diese Druckfeder und die zusätzliche Druckfeder 20, 26, die allerdings nur für die Montage benötigt wird, sind dabei innerhalb des Steuerelementes 10 gegen äußere Einwirkungen geschützt angeordnet.

**Patentansprüche**

1. Spannvorrichtung für Riemen (1) , Ketten oder dergleichen, insbesondere für den Nockenwellenantrieb einer Brennkraftmaschine, mit einer Spannrolle (6), die auf einem beweglichen Träger gelagert ist, und mit einem Steuerelement (10), von welchem bei Erwärmung der Träger über ein Betätigungsorgan entgegen der Wirkung einer Druckfder (16) in Entspannungsrichtung des Riemen (1) bewegbar ist, **dadurch gekennzeichnet**, daß

– eine Lageunveränderliche hohlzylindrische Hülse (13) als ein Bestandteil das steuerelements (10) vorgesehen ist, die am einen Ende durch einene Boden (14) vershlossen ist und am anderen Ende einen radial nach innen gericheten Flansch aufweist, gegen den von innen eine Scheibe (15) dichtend anliegt, die in ihrer Mitte einen Druckkolben (11) längsbeweglich und abgedichtet aufnimmt,

– in dem Ringhohlraum zwischen der Borhung der Hülse (13) und dem Druckkolben (11) die Druckfeder (16) angeordnet ist, die sich einerseits an der Scheibe und andererseits am Druckkolben (11) abstützt,

– zwischen dem Boden (14) und dem Druckkolben (11), dessen Stirnfläche im Abstand vom Boden (14) liegt, eine weitere Druckfeder angeordnet ist, die mit geringerer Federkraft der erstgenannten Druckfeder (16) entgegenwirkt,

– der gesamte Innenraum der Hülse (13) mit einer gasfreien Ausdehnungs flüssigkeit befüllt ist.

2. Spannvorrichtung nach Anspruch 1, **dadurch gekennzeichnet**, daß die von der Druckfeder beaufschlagte, als Stützring (15) wirkende Scheibe innerhalb der Hülse (13) über einen Dichtungsring (21) an einem den Flansch bildenden umgebördelten Hülsenrand (22) axial abgestützt ist.

3. Spannvorrichtung nach einem der vorhergehenden Ansprüche, **dadurch gekennzeichnet**, daß in eine Ringnut (19) des Druckkolbens (11) ein U-Bügel (18) einsteckbar ist, an welchem der Stützring (15) mit seiner äußeren Stirnseite axial abstützbar ist.

4. Spannvorrichtung nach einem der vorhergehenden Ansprüche, **dadurch gekennzeichnet**, daß die den Druckkolben (11) umgebende Druckfeder von mehreren Tellerfedern (16) gebildet ist, während die weitere, an dem Boden (14) abgestützte Druckfeder eine Schraubenfeder (20, 26) ist.

5. Spannvorrichtung nach einem der vorhergehenden Ansprüche, **dadurch gekennzeichnet**, daß der Stützring (15) mindestens einen von dem Dichtungsring (21) verschließbaren Längskanal (29) für das Entweichen von Luft und Einströmen von Druckflüssigkeit (27) in die Hülse (13) aufweist.

6. Spannvorrichtung nach einem der vorhergehenden Ansprüche, **dadurch gekennzeichnet**, daß der gegenüber dem Stützring (15) verschiebbare Druckkolben (11) über eine ringförmige Membran mit dem Stützring (15) verbunden ist.

7. Spannvorrichtung nach einem der vorhergehenden Ansprüche, **dadurch gekennzeichnet**, daß der gegenüber dem Stützring (15) verschiebbare Druckkolben (11) in der Bohrung des Stützringes (15) mit einer Dichtung (30) abgedichtet ist, die sich in einer inneren, in Umfangsrichtung verlaufenden Nut des Stützringes (15) befindet.

8. Verfahren zur Herstellung eines Steuerelements für eine Spannvorrichtung für Riemen, Ketten oder dergleichen, insbesondere für den Nockenwellenantrieb einer Brennkraftmaschine, nach einem der Ansprüche 1 bis 7, **dadurch gekennzeichnet**, daß der Druckkolben (11) mit einem Haltering (17), mit den Tellerfedern (16), dem Stützring (15) und dem U-Bügel (18) zusammengebaut, mit der Schraubenfeder (20, 26) und dem Dichtungsring (21) in die Hülse (13) eingesetzt wird, deren Rand anschließend zu dem nach innen gerichteten Flansch umgebördelt wird, daß die so montierte Baueinheit mit aufragendem Druckkolben (11) in ein teilweise mit Hydrauliköl gefülltes Gefäß (23) gestellt wird, wobei die Hülse (13) mit dem Stützring (15) vollständig in das Öl eingetaucht wird, und daß über den Druckkolben (11) der Stützring (15) in eine Öffnungsstellung der Hülse (13) gedrückt und nach dem Ausströmen von Luft aus der Hülse (13) und Einströmen von Öl freigegeben wird.

9. Verfahren nach Anspruch 8, **dadurch gekennzeichnet**, daß der Druckkolben (11) mit einem Stempel (28) in die Öffnungsstellung der Hülse (13) gedrückt wird, der an einem das Gefäß (23) verschließenden Deckel (24) angeordnet ist.

10. Verfahren nach Anspruch 8, **dadurch gekennzeichnet**, daß das Gefäß (23) über eine Luftabsaugöffnung (25) für die Dauer der Öffnung der Hülse (13) evakuiert wird.


**Claims**

1. Tensioning device for belts (1), chains or the like, in particular for the camshaft drive of an internal combustion engine, with a tension roller (6) mounted on a movable support and a control element (10) by which, on heating, the support can be moved via an actuating member against the action of a compression spring (16) in the slackening direction of the belt (1), **characterized in that**

– a hollow cylindrical sleeve (13) of fixed position is provided as a structural component of the control element (10), which sleeve is closed at one end by a bottom (14) and at the other end comprises a radially inwardly directed flange against which a disc (15) bears from the inside, thereby sealing the flange, the disc receiving at its centre, longitudinally displaceable and sealed, a pressure piston (11),

– the compression spring (16) is arranged in the hollow annular space between the bore of the sleeve (13) and the pressure piston (11) and bears on one side against the disc and on the other side against the pressure piston (11),

– between the bottom (14) and the pressure piston (11), whose end face is situated at a distance from the bottom (14), a further compression spring is arranged which acts with less spring force counter to the first-mentioned compression spring (16),

– the entire inner space of the sleeve (13) is filled with a gas-free expansion fluid.

2. Tensioning device according to claim 1, **characterized in that** the disc loaded by the compression spring and acting as a support ring (15) is axially supported by means of a sealing ring (21) in the sleeve (13) on a turned-over edge (22) of the sleeve which forms the flange.

3. Tensioning device according to one of the preceding claims, **characterized in that** a U-clip (18) can be inserted into an annular groove (19) of the pressure piston (11), on which U-clip (18), the support ring (15) can be axially supported by its outer end face.

4. Tensioning device according to one of the preceding claims, **characterized in that** the compression spring surrounding the pressure piston (11) is constituted by several disc springs (16) while the further compression spring supported on the bottom (14) is a coil spring (20, 26).

5. Tensioning device according to one of the preceding claims, **characterized in that** the support ring (15) comprises at least one longitudinal canal (29) which can be closed by the sealing ring (21) and through which air can escape and pressure fluid (27) can flow into the sleeve (13).

6. Tensioning device according to one of the preceding claims, **characterized in that** the pressure piston (11) which is displaceable relative to the support ring (15) is connected by an annular diaphragm with the support ring (15).

7. Tensioning device according to one of the preceding claims, **charcterized in that** the pressure piston (11) which is displaceable relative to the support ring (15) is sealed in the bore of the support ring (15) by a seal (30) situated in an inner circumferential groove of the support ring (15).

8. Method of manufacturing a control element for a tensioning device for belts, chains or the like, in particular for the camshaft drive of an internal combustion engine, according to one of the claims 1 to 7, **characterized in that** the pressure piston (11) pre-assembled with a retaining ring (17), the disc springs (16), the support ring (15) and the U-clip (18) is inserted together with the coil spring (20, 26) and the sealing ring (21) into the sleeve (13) whose edge is then turned over into the inwardly directed flange, the thus assembled structural unit is placed with protruding pressure piston (11) in a vessel (23) partially filled with hydraulic oil, the sleeve (13) with the support ring (15) being completely immersed in the oil, and the support ring (15) is pressed into an opening position of the sleeve (13) by the pressure piston (11) and released after air has flowed out of the sleeve (13) and oil has flowed in.

9. Method according to claim 8, **characterized in that** the pressure piston (11) is pressed into the opening position of the sleeve (13) by a die (28) arranged on a lid (24) which closes the vessel (23).

10. Method according to claim 8, **characterized in that** the vessel (23) is evacuated via an air suction opening (25) for the duration of the open state of the sleeve (13).

**Revendications**

1. Tendeur de courroie (1), de chaîne ou analogue, en particulier pour la commande de l'arbre à cames d'un moteur à combustion interne, comprenant un galet-tendeur (6) monté sur un support mobile et un élément de commande (10) par lequel, lors du réchauffement, le support est apte à être déplacé par un organe d'actionnement dans le sens de la détente de la courroie (1) à l'encontre de l'action d'un ressort de pression (16), **caractérisé** en ce que :

– une douille cylindrique creuse (13) à position fixe est prévue comme composant de l'élément de commande (10) et est fermée à l'une de ses extrémités par un fond (14) et comprend à l'autre extrémité, une bride orientée radialement vers l'intérieur, bride contre laquelle s'appuie du côté intérieur et de manière étanche, une rondelle (15), et qui reçoit en son centre et de manière étanche, un piston de pression (11) à déplacement longitudinal,

– dans l'espace annulaire vide défini entre l'alésage de la douille (13) et le piston de pression (11) est agencé le ressort de pression (16) qui s'appuie d'un côté contre la rondelle (15) et de l'autre côté contre le piston de pression (11),

– entre le fond (14) et le piston de pression (11) dont la face frontale est située à distance du fond (14), il est agencé un ressort supplémentaire de pression qui agit avec une force de ressort plus faible à l'encontre du premier ressort de pression (16),

– tout l'espace intérieur de la douille (13) est rempli d'un fluide de dilatation exempt de gaz.

2. Tendeur selon la revendication 1, **caractérisé** en ce que la rondelle sollicitée par le ressort de pression et agissant en tant que bague de support (15), est supportée axialement à l'aide d'une bague d'étanchéité (21) dans la douille (13) sur un bord rabattu (22) de celle-ci qui forme la bride.

3. Tendeur selon une des revendications précédentes, **caractérisé** en ce qu'on peut introduire dans une gorge annulaire (19) du piston de pression (11), un étrier en U (18) sur lequel la bague de support (15) est apte à être supportée axialement par sa face frontale extérieure.

4. Tendeur selon une des revendications précédentes, **caractérisé** en ce que le ressort de pression entourant le piston de pression (11) est constitué de plusieurs ressorts Belleville (16), alors que le ressort supplémentaire de pression qui est supporté sur le fond (14), est un ressort à boudin (20, 26).

5. Tendeur selon une des revendications précédentes, **caractérisé** en ce que la bague de support (15) comprend au moins un canal longitudinal (29) qui est apte à être fermé par la bague d'étanchéité (21) et qui sert à l'échappement de l'air et à l'écoulement du fluide sous pression (27) dans la douille (13).

6. Tendeur selon une des revendications précédentes, **caractérisé** en ce que le piston de pression (11) qui est déplaçable par rapport à la bague de support (15) est relié par une membrane annulaire à la bague de support (15).

7. Tendeur selon une des revendications précédentes, **caractérisé** en ce que le piston de pression (11) qui est déplaçable par rapport à la bague de support (15) est étanché dans l'alésage de la bague de support (15) par un joint (30) disposé dans une gorge périphérique intérieure de la bague de support (15).

8. Méthode de fabrication d'un élément de commande défini par une des revendications 1 à 7, pour un tendeur de courroie, de chaîne ou analogue, en particulier pour la commande de l'arbre à cames d'un moteur à combustion interne, **caractérisée** en ce que le piston de pression (11) préassemblé avec une bague de retenue (17), les ressorts Belleville (16), la bague de support (15) et l'étrier en U (18), est inséré avec le ressort à boudin (20, 26) et la bague d'étanchéité (21) dans la douille (13) dont le bord est rabattu ensuite du côté orienté vers l'intérieur, en ce que l'unité de construction ainsi assemblée est placée avec le piston de pression (11) en saillie dans un récipient (23) partiellement rempli d'huile hydraulique, la douille (13) avec la bague de support (15) étant complètement noyée dans l'huile, et en ce que la bague de support (15) est poussée dans une position d'ouverture de la douille (13) par l'intermédiaire du piston de pression (11) et libérée après l'échappement de l'air de la douille (13) et l'écoulement de l'huile dans celle-ci.

9. Méthode selon la revendication 8, **caractérisée** en ce que le piston de pression (11) est poussé dans la position d'ouverture de la douille (13) à l'aide d'un poinçon (28) qui est agencé sur un couvercle (24) qui ferme le récipient (23).

10. Méthode selon la revendication 8, **caractérisée** en ce que l'air est évacué du récipient (23) par un orifice d'aspiration d'air (25) pendant la durée de l'ouverture de la douille (13).

Fig.1

Fig. 2

Fig. 3